# EUROPEAN PATENT APPLICATION

(11) **EP 4 741 184 A1**
(43) Date of publication of application: **13.05.2026**
(21) Application number: 24835357.5
(22) Date of filing: 03.07.2024
(51) Int. Cl.: B60H 1/00

(54) **THERMAL MANAGEMENT SYSTEM AND CONTROL METHOD THEREOF, AND VEHICLE**

(30) Priority: 03.07.2023 CN 202310810600; 31.08.2023 CN 202311129155
(71) Applicant: BYD Company Limited, Shenzhen, Guangdong 518118 (CN)
(72) Inventor: LING, Heping, Shenzhen, Guangdong 518118 (CN); HUANG, Wei, Shenzhen, Guangdong 518118 (CN); MA, Rui, Shenzhen, Guangdong 518118 (CN); LAI, Feng, Shenzhen, Guangdong 518118 (CN); LUO, Yili, Shenzhen, Guangdong 518118 (CN)
(74) Representative: Mathys & Squire
(86) International application number: PCT/CN2024/103257
(87) International publication number: WO 2025/007877

(57) **Abstract**

A thermal management system and a control method therefor and a vehicle are disclosed. The thermal management system includes a battery subsystem, the battery subsystem includes at least one heat exchange branch, the heat exchange branch is configured to exchange heat with a battery, and the control method includes: obtaining a battery heating signal; and entering, by the thermal management system, a preheating mode, where in the preheating mode, a temperature of a heat exchange medium at an outlet end of the at least one heat exchange branch is greater than or equal to a first threshold T1.

## Description

### CROSS-REFERENCE TO RELATED APPLICATIONS

This application is provided based on Chinese Patent Applications Nos. 2023108106003 and 2023111291550, filed on July 3, 2023 and August 31, 2023, and claims priority to these Chinese Patent Applications, which are incorporated herein by reference in their entireties.

### TECHNICAL FIELD

This application relates to the field of vehicle technologies, and in particular, to a thermal management system and a control method therefor and a vehicle.

### BACKGROUND

Vehicle battery heating is usually implemented by using a gaseous refrigerant discharged by a compressor to exchange heat with a battery. The gaseous refrigerant exchanges heat with the battery, and when the battery is heated, the gaseous refrigerant is cooled, depressurized, and liquefied. In the related art, when the temperature of a battery is low, the heat exchange area of battery heat exchange is large, or the flow resistance of a battery heat exchange module is large, the heat exchange medium excessively exchanges heat in the battery heat exchange module, causing low intake pressure and low discharge pressure (low high-side pressure) in the compressor, which exceed the operating range of the compressor, and may cause damage to the compressor.

### SUMMARY

This application is intended to resolve at least one of technical problems in the conventional technology. Therefore, this application provides a control method for a thermal management system, to reduce a probability that a compressor is damaged.

This application further provides a thermal management system to which the foregoing control method is applied, to reduce a probability that a compressor is damaged.

This application further provides a vehicle to which the foregoing control method is applied, to reduce a probability that a compressor is damaged.

According to the control method for a thermal management system in embodiments of this application, the thermal management system includes a battery subsystem, the battery subsystem includes at least one heat exchange branch, the heat exchange branch is configured to exchange heat with a battery, and the control method includes: obtaining a battery heating signal; and entering, by the thermal management system, a preheating mode, wherein in preheating mode, a temperature of a heat exchange medium at an outlet end of the at least one heat exchange branch is greater than or equal to a first threshold T1.

According to the control method for a thermal management system in embodiments of this application, the temperature of the heat exchange medium at the outlet end of the at least one heat exchange branch is set to be greater than or equal to the first threshold T1, so as to control the heat exchange medium at the outlet end to remain in a specific temperature state, to avoid excessive liquefaction of the heat exchange medium in a heat exchanger, thereby increasing pressure at an outlet of a compressor, and avoiding damage to the compressor caused when the compressor operates outside its operating range.

In some embodiments, a temperature difference ΔT between a temperature of a heat exchange medium at an inlet end of the at least one heat exchange branch and the temperature at the outlet end is less than or equal to T2, and T2 is a second threshold.

In some embodiments, the thermal management system enters a normal heating mode when a temperature of the battery reaches a first temperature, and in normal heating mode, the at least one heat exchange branch is controlled, based on a real-time temperature of the battery, to be turned on to heat the battery.

In some embodiments, the battery subsystem includes a plurality of heat exchange branches connected in parallel, the plurality of heat exchange branches are configured to exchange heat with the battery, and the plurality of heat exchange branches include a pressure adjustment sub-branch. In preheating mode, a temperature of a heat exchange medium at an outlet end of the pressure adjustment sub-branch is controlled to be greater than or equal to the first threshold T1.

In some embodiments, in preheating mode, a temperature difference ΔT between an inlet end and the outlet end of the pressure adjustment sub-branch is controlled to be less than or equal to T2.

In some embodiments, at least one heat exchange branch is configured to exchange heat with a first side of the battery, and at least one heat exchange branch is configured to exchange heat with a second side of the battery.

In some embodiments, the plurality of heat exchange branches include the pressure adjustment sub-branch and a heat exchange sub-branch, and in preheating mode, a total flow Q1 in the pressure adjustment sub-branch is greater than a total flow Q2 in the heat exchange sub-branch.

In some embodiments, in preheating mode, a ratio Q1/Q2 of the total flow Q1 of heat exchange media in the pressure adjustment sub-branch to the total flow Q2 in a remaining heat exchange branch is greater than a third threshold.

In some embodiments, the plurality of heat exchange branches include the pressure adjustment sub-branch and the heat exchange sub-branch, at least some of the heat exchange branches include a flow regulating valve, and an opening degree of a valve in the pressure adjustment sub-branch is controlled to be greater than an opening degree of a valve in the heat exchange sub-branch.

In some embodiments, the plurality of heat exchange branches include the pressure adjustment sub-branch and the heat exchange sub-branch, and in preheating mode, the heat exchange sub-branch is controlled to be in a non-operating state.

In some embodiments, when a minimum value of temperature values at a plurality of positions of the battery reaches a first specified temperature, the temperature of the battery reaches the first temperature.

In some embodiments, the thermal management system further includes normal heating mode, the heat exchange branch includes the pressure adjustment sub-branch, and a flow in the pressure adjustment sub-branch in preheating mode is greater than a flow in the pressure adjustment sub-branch in normal heating mode.

In some embodiments, the heat exchange branch includes a battery heat exchange module and a throttle element that are connected in series, and an opening degree of the throttle element is adjusted based on a degree of superheating of a heat exchange medium in the heat exchange branch.

In some embodiments, in preheating mode, the adjusting an opening degree of the throttle element based on a degree of superheating of a heat exchange medium in the heat exchange branch includes: decreasing the opening degree of the throttle element when the degree of superheating ΔT4 is less than a first specified value ΔTa; increasing the opening degree of the throttle element when the degree of superheating ΔT4 is greater than a second specified value ΔTb; or maintaining the opening degree of the throttle element when the degree of superheating ΔT4 is greater than or equal to ΔTa and less than or equal to ΔTb.

In some embodiments, the plurality of heat exchange branches include a bottom heat exchange branch and a top heat exchange branch, the top heat exchange branch is located at a top of the battery, and the bottom heat exchange branch is located at a bottom of the battery. In preheating mode, a temperature difference ΔT between an inlet end and an outlet end of the bottom heat exchange branch is controlled to be less than a second threshold.

In some embodiments, the thermal management system further includes a coolant subsystem; the control method further includes: When a waste heat recovery instruction is obtained, the coolant subsystem exchanges heat with the battery subsystem.

In some embodiments, the thermal management system has normal heating mode. In normal heating mode, each of the heat exchange branches is controlled to heat the battery; and the thermal management system enters normal heating mode when a water temperature of the coolant subsystem reaches a third specified temperature.

The thermal management system according to embodiments of this application includes: a compressor, wherein the compressor has an air inlet and an air outlet; at least one heat exchange branch, wherein the heat exchange branch exchanges heat with a battery, the thermal management system has a battery heating mode, and in battery heating mode, a first end of the heat exchange branch is connected to the air outlet; a first heat exchanger, wherein a first end of the first heat exchanger is connected to a second end of the heat exchange branch through a throttle element, and a second end of the first heat exchanger is connected to the air inlet; and a control module, wherein the control module is configured to perform the foregoing control method for a thermal management system.

According to the thermal management system in embodiments of this application, the foregoing control method is applied to control a heat exchange medium at an outlet end to remain in a specific temperature state, thereby increasing pressure at an outlet of a compressor, and avoiding damage to the compressor caused when the compressor operates outside its operating range.

The vehicle according to embodiments of this application includes a thermal management system and a control module, wherein the control module is configured to perform the foregoing control method for a thermal management system.

According to the vehicle in embodiments of this application, the control module is disposed to perform the foregoing control method for a thermal management system, so as to control a heat exchange medium at an outlet end to remain in a specific temperature state, thereby increasing pressure at an outlet of a compressor, and avoiding damage to the compressor caused when the compressor operates outside its operating range.

In some embodiments, the control module includes a storage medium. The storage medium is configured to store executable instructions, and the instructions are used to perform the foregoing control method for a thermal management system.

According to the storage medium in embodiments of this application, the foregoing control method for a thermal management system is performed to control a heat exchange medium at an outlet end to remain in a specific temperature state, thereby increasing pressure at an outlet of a compressor, and avoiding damage to the compressor caused when the compressor operates outside its operating range. Some of additional aspects and advantages of this application are provided in the following descriptions, and some of the additional aspects and advantages become clear from the following descriptions or are learned from practice of this application.

### BRIEF DESCRIPTION OF DRAWINGS

The foregoing and/or additional aspects and advantages of this application are clear and easily understood from the descriptions of the embodiments provided in conjunction with the following drawings, where:
FIG. 1 is a flowchart of a control method for a thermal management system according to some embodiments of this application;
FIG. 2 is a diagram of a structure of a thermal management system according to an embodiment of this application;
FIG. 3 is a diagram of a structure of a thermal management system in a battery heating mode according to an embodiment of this application, where an arrow in the figure shows a refrigerant flow direction;
FIG. 4 is a flowchart of a control method for a thermal management system according to some other embodiments of this application;
FIG. 5 is a diagram of a structure of a battery heat exchange module according to some embodiments of this application; and
FIG. 6 is a diagram of a structure of a battery heat exchange module according to some other embodiments of this application.

### Reference numerals:

100: thermal management system;
80: battery subsystem; 15: throttle element; 16: flow regulating valve; 20: heat exchange branch; 21: pressure adjustment sub-branch; 30: outlet end; 40: inlet end; 56: battery heat exchange module; 60: coolant subsystem;
1: compressor; 2: internal condenser; 3: external condenser; 4: first heat exchanger; 5: battery upper cold plate; 6: battery lower cold plate; 7: internal evaporator; 8: accumulator; 10: radiator; 11: liquid storage tank; 12: four-way water valve; 13: power assembly; 14: water pump; 151: first electronic expansion valve; 152: second electronic expansion valve; 153: third electronic expansion valve; 154: fourth electronic expansion valve; 161: first large-diameter electronic expansion valve; 162: second large-diameter electronic expansion valve; 171: first solenoid valve; 172: second solenoid valve; 173: third solenoid valve; 174: fourth solenoid valve; 181: first one-way valve; 182: second one-way valve; 184: fourth one-way valve; PT1: first temperature and pressure integrated sensor; PT2: second temperature and pressure integrated sensor; PT3: third temperature and pressure integrated sensor; PT4: fourth temperature and pressure integrated sensor; T2: second temperature sensor; T3: third temperature sensor; and T4: fourth temperature sensor.

### DESCRIPTION OF EMBODIMENTS

The following describes in detail embodiments of this application, and examples of the embodiments are shown in the accompanying drawings. Same or similar reference numerals throughout the accompanying drawings indicate same or similar elements or elements having same or similar functions. The following embodiments described with reference to the accompanying drawings are examples and are merely intended to explain this application, but will not be understood as a limitation on this application.

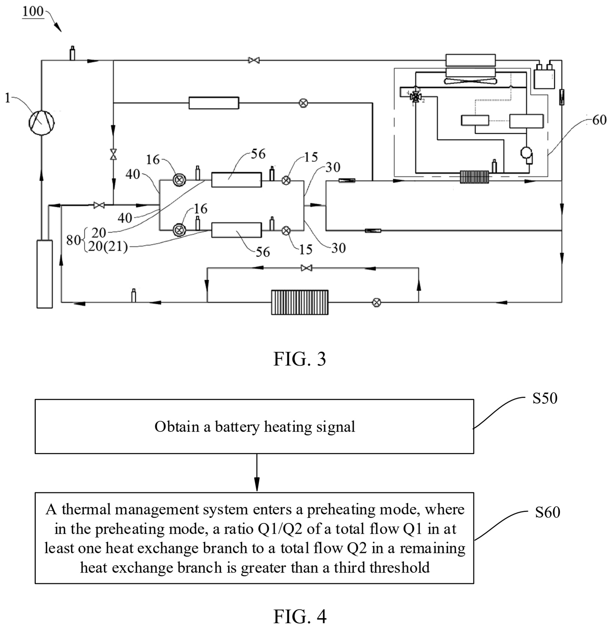

The following describes a control method for a thermal management system according to an embodiment of this application with reference to the accompanying drawings. As shown in FIG. 3, a thermal management system 100 includes a battery subsystem 80, the battery subsystem 80 includes at least one heat exchange branch 20, and the heat exchange branch 20 is configured to exchange heat with a battery. Specifically, the battery subsystem 80 may include one heat exchange branch 20, two heat exchange branches 20, or three or more heat exchange branches 20.

It will be further noted that the thermal management system 100 includes a compressor 1. An air outlet of the compressor 1 may be connected to the heat exchange branch 20 to discharge a high-temperature gaseous heat exchange medium to the heat exchange branch 20, and a heat exchange medium that has exchanged heat with the battery in the heat exchange branch 20 may be discharged from an outlet end 30 to an air inlet of the compressor 1.

In some embodiments, the heat exchange medium of the heat exchange branch 20 may directly exchange heat with the battery. In some other embodiments, the thermal management system 100 further includes a coolant circulation circuit for heat exchange with the heat exchange branch 20, and the coolant circulation circuit exchanges heat with the battery.

It will be noted that the battery includes a battery cell disposed in a housing. The heat exchange branch may directly come into contact with the battery cell to exchange heat, or the heat exchange branch 20 may come into contact with the housing to exchange heat, so as to indirectly exchange heat with the battery cell.

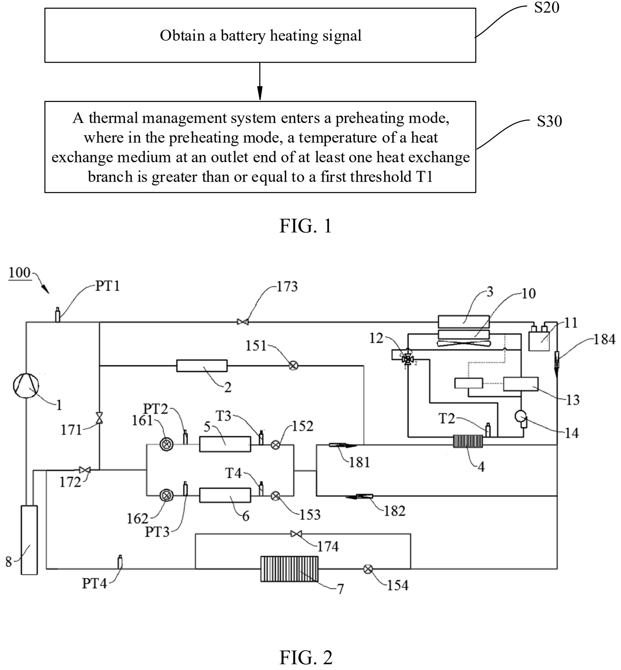

According to the control method for a thermal management system in this embodiment of this application, as shown in FIG. 1, the control method includes the following steps.

S20: obtain a battery heating signal.

S30: the thermal management system 100 enters a preheating mode, where in preheating mode, a temperature of a heat exchange medium at the outlet end 30 of the at least one heat exchange branch 20 is greater than or equal to a first threshold T1. It should be noted that when the battery subsystem includes two or more heat exchange branches 20, in preheating mode, the temperature of the heat exchange medium at the outlet end of the at least one heat exchange branch 20 in the plurality of heat exchange branches 20 is controlled to be greater than or equal to the first threshold T1.

When an electrical signal is received, the thermal management system 100 enters preheating mode, and all electrical signals that satisfy the foregoing condition (that is, the thermal management system is controlled to enter preheating mode) are battery heating signals.

It should be noted that, in preheating mode, the heat exchange medium at the outlet end 30 of the at least one heat exchange branch 20 may exist in a gaseous phase or a gas-liquid phase, provided that the temperature of the heat exchange medium at the outlet end 30 is greater than or equal to the first threshold T1.

Specifically, in this application, the temperature of the heat exchange medium is limited to be greater than or equal to the first threshold T1, so that a ratio of a gaseous heat exchange medium to a liquid heat exchange medium can be controlled, to adjust intake pressure or discharge pressure of the compressor, thereby avoiding damage to the compressor. For example, a higher first threshold leads to a higher proportion of gaseous heat exchange medium, and a lower first threshold leads to a lower proportion of gaseous heat exchange medium.

For example, when a battery heating instruction, a vehicle startup instruction, a charging heating instruction, or a discharging heating instruction is received, and a battery cell temperature is less than a preset value, the thermal management system 100 enters preheating mode. When a controller receives these instructions or information, a signal that triggers the thermal management system 100 to enter preheating mode is the battery heating signal. The controller may be in the thermal management system 100, may be a domain controller, or may be a vehicle body controller. This is not limited herein. The battery heating instruction, the vehicle startup instruction, the charging heating instruction, and the discharging heating instruction may be triggered by a user on a mobile terminal. When a transceiver of a vehicle receives these instructions, and the battery cell temperature is less than the preset value, the thermal management system 100 enters preheating mode. The battery heating instruction, the vehicle startup instruction, the charging heating instruction, and the discharging heating instruction may alternatively be triggered by the user on a vehicle end. When the controller receives these instructions, and the battery cell temperature is less than the preset value, the thermal management system 100 enters preheating mode. The first threshold is a preset temperature value. It will be understood that the first threshold reflects a state of the heat exchange medium, and a state of the heat exchange medium at the outlet end 30 is controlled by controlling the first threshold. For example, the state of the heat exchange medium may include a temperature or a phase (a gaseous phase or a gas-liquid phase).

Specifically, different first thresholds are correspondingly set for different heat exchange media to satisfy different requirements.

In the related art, when a temperature of a battery is low, a heat exchange area of battery heat exchange is large, or a flow resistance of a battery heat exchange module is large, an amount of heat exchanged between a heat exchange medium in a heat exchange branch and the battery is large. Therefore, a compressor has low discharge pressure (low high-side pressure). In one aspect, a temperature at an inlet of the battery heat exchange module that exchanges heat with the battery is low, and a temperature difference between the battery heat exchange module and the battery is small, causing a low heating temperature rise rate and a low heating rate. In another aspect, pressure at an air inlet of the compressor is low (low low-side pressure), which operates outside the operating range of the compressor, and may cause damage to the compressor.

In this application, the state of the heat exchange medium at the outlet end 30 may be controlled by setting the temperature of the heat exchange medium at the outlet end 30, so that the temperature of the heat exchange medium at the outlet end 30 is in a target state. This can avoid an excessively large pressure difference between an inlet end and an outlet end of the heat exchange branch 20, so that a pressure difference between the air inlet and the air outlet of the compressor 1 can be small, thereby not only avoiding damage to the compressor 1 caused when the compressor 1 operates outside the operating range, but also avoiding affecting a heating effect on the battery because a temperature of the heat exchange medium is low.

According to the control method for a thermal management system in this embodiment of this application, the temperature of the heat exchange medium at the outlet end 30 of the at least one heat exchange branch 20 is set to be greater than or equal to the first threshold T1, so as to control the heat exchange medium at the outlet end 30 to remain in a specific temperature state, thereby increasing pressure at the outlet of the compressor 1, and avoiding damage to the compressor 1 caused when the compressor 1 operates outside its operating range.

In some examples of this application, the first threshold may be set to be a saturation temperature of the heat exchange medium at the outlet end 30 at corresponding pressure minus 5°C, that is, a subcooling degree of the heat exchange medium at the outlet 30 of the at least one heat exchange branch 20 is less than 5°C, to avoid excessive liquefaction. The subcooling degree is defined as a difference between a temperature of condensed water at specific pressure and a saturation temperature at the corresponding pressure.

In some examples of this application, the first threshold may be set to 20°C, and the temperature of the heat exchange medium at the outlet end 30 of the at least one heat exchange branch 20 is greater than or equal to 20°C, so that the ratio of the gaseous heat exchange medium to the liquid heat exchange medium can be ensured, to adjust intake pressure or discharge pressure of the compressor, thereby avoiding damage to the compressor.

In some embodiments, a temperature difference ΔT between a temperature of a heat exchange medium at an inlet end 40 of the at least one heat exchange branch 20 and the temperature at the outlet end 30 is less than or equal to T2, and T2 is a second threshold. The temperature difference between the temperature of the heat exchange medium at the inlet end 40 and the temperature of the heat exchange medium at the outlet end 30 is set to be less than or equal to T2, so as to control a heat exchange status of the heat exchange medium, thereby avoiding excessive liquefaction of the heat exchange medium.

It will be noted that the second threshold is a preset value, may be calibrated based on an actual situation, and is a reference value, a calibrated value, an experimental value, or the like. It will be understood that the second threshold reflects a state change situation of heat exchange media at the inlet end 40 and the outlet end 30. A state change situation of the heat exchange medium is controlled by controlling the second threshold, thereby further avoiding an excessively large pressure difference between two ends of the heat exchange branch.

Specifically, different second thresholds are correspondingly set for different heat exchange media to satisfy different requirements. Alternatively, the second threshold may be set based on the temperature of the battery, the heat exchange area of the battery heat exchange module, the flow resistance of the battery heat exchange module, or the like.

In some embodiments of this application, the second threshold is 30°C, thereby further avoiding an excessively large pressure difference between two ends of the heat exchange branch.

In some embodiments, the thermal management system 100 enters a normal heating mode when the temperature of the battery reaches a first temperature, and in normal heating mode, the at least one heat exchange branch 20 is controlled, based on the temperature of the battery, to be turned on to heat the battery. The temperature of the battery may be a real-time temperature. After the temperature of the battery reaches the first temperature, the thermal management system 100 is controlled to enter normal heating mode, so as to control each heat exchange branch 20 to be turned on to heat the battery, so that the battery is fully heated, and a capability of the thermal management system 100 is fully used.

When the thermal management system 100 enters normal heating mode, it means that the temperature of the battery reaches the first temperature. In preheating mode, the battery heats up, and a requirement of the battery for an amount of heating decreases, which does not cause a problem of low discharge pressure and low intake pressure of the compressor 1.

By controlling, based on the real-time temperature of the battery, the at least one heat exchange branch 20 to be turned on, the control method is more suitable for actual requirements of the battery. For example, if the temperature of the battery is low, a plurality of heat exchange branches 20 may be turned on to heat the battery at the same time, or when the temperature of the battery is high, fewer heat exchange branches 20 may be controlled to heat the battery, thereby saving heat.

Specifically, the first temperature may be a preset temperature value. The first temperature may alternatively be a value that is set in real time based on an ambient temperature or the temperature of the battery.

More specifically, different first temperatures are correspondingly set for different heat exchange media to satisfy a requirement. Alternatively, different first temperatures are correspondingly set for different battery types to satisfy a requirement. For example, batteries of different materials: a lithium battery and a lithium iron phosphate battery, correspond to different first temperatures; batteries of different shapes: a blade battery, a square battery, and a cylindrical battery, also correspond to different first temperatures; and batteries of different capacities: a battery with an endurance mileage of 80 kilometers and a battery with an endurance mileage of 200 kilometers, also correspond to different first temperatures. The first temperature may be set based on a heat exchange medium, a battery material, a battery shape, and a battery capacity.

In some embodiments, the battery subsystem 80 includes a plurality of heat exchange branches 20 connected in parallel, the plurality of heat exchange branches 20 are configured to exchange heat with the battery, and the plurality of heat exchange branches 20 include a pressure adjustment sub-branch 21. In preheating mode, a temperature of a heat exchange medium at an outlet end 30 of the pressure adjustment sub-branch 21 is controlled to be greater than or equal to the first threshold T1. A remaining branch other than the pressure adjustment sub-branch may be selectively turned on or turned off based on a heat exchange requirement of the battery. When the remaining branch is turned on, a value of the first threshold T1 may be set to satisfy a battery heating requirement and avoid damage to the compressor. The plurality of parallel heat exchange branches 20 are disposed, so that one heat exchange branch 20 or a plurality of heat exchange branches 20 are selectively controlled, based on an actual heating requirement of the battery, to heat the battery, thereby flexibly heating the battery, and saving energy.

In some embodiments, in preheating mode, a temperature difference ΔT between an inlet end 40 and the outlet end 30 of the pressure adjustment sub-branch 21 is controlled to be less than or equal to T2. The temperature difference ΔT between the inlet end 40 and the outlet end 30 of the pressure adjustment sub-branch 21 is set to be less than or equal to T2, so as to control a state change amount of heat exchange media at the inlet end 40 and the outlet end 30 of the pressure adjustment sub-branch 21, and maintain pressure at the inlet end 40, thereby avoiding an excessively large pressure difference between two ends of the heat exchange branch. The remaining branch other than the pressure adjustment sub-branch may be selectively turned on or turned off based on the heat exchange requirement of the battery. When the remaining branch is turned on, a value of T2 may be set to satisfy a battery heating requirement and avoid damage to the compressor.

It should be noted that the compressor 1 usually discharges a high-pressure refrigerant and draws in a low-pressure refrigerant. The compressor 1 usually operates in a case in which pressure at an air outlet is high and pressure at an air inlet is low. However, in the related technology, a high battery heat exchange requirement causes low pressure at the air outlet of the compressor. As a result, the compressor cannot operate normally, and the compressor may be damaged. In this application, the plurality of heat exchange branches 20 include the pressure adjustment sub-branch 21, and the temperature difference ΔT between the inlet end 40 and the outlet end 30 of the pressure adjustment sub-branch 21 is set to be less than or equal to T2, so as to control pressure of the pressure adjustment sub-branch 21, and adjust pressure at the air outlet of the compressor 1, thereby reducing a probability that the compressor 1 is damaged.

In some embodiments, at least one heat exchange branch 20 is configured to exchange heat with a first side of the battery, and at least one heat exchange branch 20 is configured to exchange heat with a second side of the battery. In other words, the plurality of heat exchange branches 20 are configured to heat different sides of the battery, so as to fully heat the battery, thereby improving temperature equalization.

For example, one heat exchange branch 20 is configured to heat an upper side of the battery, and another heat exchange branch 20 is configured to heat a lower side of the battery. Alternatively, one heat exchange branch 20 is configured to heat a left side of the battery, and another heat exchange branch 20 is configured to heat a right side of the battery. Alternatively, one heat exchange branch 20 is configured to heat a front side of the battery, and another heat exchange branch 20 is configured to heat a rear side of the battery. Certainly, the first side and the second side are not limited to opposite sides, but may be adjacent sides, for example, the first side is the upper side and the second side is the front side. Details are not described herein again.

In some embodiments, in normal heating mode, the plurality of heat exchange branches 20 are controlled to heat the battery. Therefore, a heating speed can be increased.

In some embodiments, in preheating mode, a total flow Q1 in the pressure adjustment sub-branch 21 is greater than a total flow Q2 in a remaining heat exchange branch. Specifically, the plurality of heat exchange branches 20 include the pressure adjustment sub-branch 24 and a heat exchange sub-branch. In preheating mode, a total flow in the pressure adjustment sub-branch 21 is controlled to be greater than a total flow in the heat exchange sub-branch, so that a flow of heat exchange media in the pressure adjustment sub-branch 21 is large, to avoid low discharge pressure of the compressor due to a large heat exchange amount between the pressure adjustment sub-branch 21 and the battery, avoid damage to the compressor 1 caused when the compressor 1 operates outside its operating range, and avoid affecting the heating effect on the battery because the temperature of the heat exchange medium is low due to the large heat exchange amount.

In some embodiments, in preheating mode, a ratio Q1/Q2 of the total flow Q1 of heat exchange media in the pressure adjustment sub-branch 21 to the total flow Q2 in the remaining heat exchange branch 20 (the heat exchange sub-branch) is greater than a third threshold. The ratio Q1/Q2 of the total flow Q1 of heat exchange media in the pressure adjustment sub-branch 21 to the total flow Q2 in the remaining heat exchange branch 20 is set to be greater than the third threshold, so that the heat exchange medium flowing out of the pressure adjustment sub-branch and the heat exchange medium flowing out of the remaining branch finally enter the air inlet of the compressor. Intake pressure at the air inlet of the compressor can be adjusted by setting a value of the third threshold, thereby reducing a probability that the compressor 1 is damaged. When the temperature of the battery is low, the ratio Q1/Q2 is greater than the third threshold, and the heat exchange media discharged by the compressor 1 can sufficiently enter the pressure adjustment sub-branch 21. In this way, even if the temperature of the battery is low, because there are sufficient heat exchange media in the pressure adjustment sub-branch 21, when the battery heat exchange module 56 fully exchanges heat with the battery, the temperature and/or the pressure of the heat exchange medium at the outlet of the pressure adjustment sub-branch 21 still satisfy a requirement of the compressor 1 for normal operation, thereby avoiding a case in which the pressure at the air outlet and the air inlet of the compressor 1 is lower than a normal operating value.

Specifically, Q1 is the total flow of the heat exchange media in the pressure adjustment sub-branch 21. There may be one pressure adjustment sub-branch 21, and Q1 is a flow of heat exchange media in the one pressure adjustment sub-branch 21. There may alternatively be a plurality of pressure adjustment sub-branches 21, and Q1 is a total flow of heat exchange media in the plurality of pressure adjustment sub-branches 21.

Specifically, Q2 is the total flow of the heat exchange media in the remaining heat exchange branch 20. There may be one remaining heat exchange branch 20, and Q2 is a flow of heat exchange media in the one remaining heat exchange branch 20. There may alternatively be a plurality of remaining heat exchange branches 20, and Q2 is a total flow of heat exchange media in the plurality of remaining heat exchange branches 20.

For example, there are two heat exchange branches 20, and the two heat exchange branches 20 are connected in parallel. One heat exchange branch 20 is configured as the pressure adjustment sub-branch 21. In preheating mode, a flow of heat exchange media in the pressure adjustment sub-branch 21 is Q1, a flow in the other heat exchange branch 20 is Q2, and Q1/Q2 is greater than the third threshold.

Alternatively, there are three heat exchange branches 20, and the three heat exchange branches 20 are connected in parallel. One heat exchange branch 20 is configured as the pressure adjustment sub-branch 21. In preheating mode, a flow of heat exchange media in the pressure adjustment sub-branch 21 is Q1, a total flow in the other two heat exchange branches 20 is Q2, and Q1/Q2 is greater than the third threshold.

Alternatively, there are three heat exchange branches 20, and the three heat exchange branches 20 are connected in parallel. Two heat exchange branches 20 are configured as pressure adjustment sub-branches 21. In preheating mode, a flow of heat exchange media in the two pressure adjustment sub-branches 21 is Q1, a flow in another heat exchange branch 20 is Q2, and Q1/Q2 is greater than the third threshold.

Specifically, the third threshold is a preset value. It will be understood that the third threshold reflects a concentration degree of the heat exchange medium. By changing the third threshold, the concentration degree of the heat exchange medium is controlled, and a quantity of heat exchange media discharged by the compressor 1 into the pressure adjustment sub-branch 21 is adjusted, so that a quantity of heat exchange media in the pressure adjustment sub-branch 21 is sufficient. When the battery heat exchange module 56 fully exchanges heat with the battery, the temperature and/or the pressure of the heat exchange medium at the outlet of the pressure adjustment sub-branch 21 still satisfy the requirement of the compressor 1 for normal operation, thereby avoiding a case in which the pressure at the air outlet and the air inlet of the compressor 1 is lower than a normal operating value.

For example, the third threshold is 2, in other words, the flow in the pressure adjustment sub-branch 21 accounts for two thirds or above of the total flow. This further improves the concentration degree of the heat exchange medium. Most of the heat exchange media discharged by the compressor 1 are concentrated in the pressure adjustment sub-branch 21, so that the quantity of heat exchange media in the pressure adjustment sub-branch 21 is sufficient. When the battery heat exchange module 56 fully exchanges heat with the battery, the temperature and/or the pressure of the heat exchange medium at the outlet of the pressure adjustment sub-branch 21 still satisfy the requirement of the compressor 1 for normal operation, thereby avoiding a case in which the pressure at the air outlet and the air inlet of the compressor 1 is lower than a normal operating value.

The foregoing will be briefly understood as follows: In the related technology, an upper limit of a total refrigerant flow supplied by the compressor is a fixed value, a large quantity of heat exchange branches require a large quantity of refrigerants, and each heat exchange branch obtains a small quantity of refrigerants. As a result, a refrigerant in each heat exchange branch fully exchanges heat with the battery. When the temperature of the battery is low, a liquefaction degree of a refrigerant of a battery heat exchange module 56 in each heat exchange branch is high, thereby affecting the pressure at the air inlet and the air outlet of the compressor, and further affecting normal operation of the compressor. In this application, Q1/Q2 is set to be greater than the third threshold, so that the heat exchange media discharged by the compressor 1 can sufficiently enter the pressure adjustment sub-branch 21. In this way, even if the temperature of the battery is low, because the quantity of heat exchange media in the pressure adjustment sub-branch 21 is sufficient, when the battery heat exchange module 56 fully exchanges heat with the battery, the temperature and/or the pressure of the heat exchange medium at the outlet of the pressure adjustment sub-branch still satisfy the requirement of the compressor for normal operation, thereby avoiding a case in which the pressure at the air outlet and the air inlet of the compressor 1 is lower than a normal operating value.

In some embodiments, at least one heat exchange branch 20 includes a flow regulating valve 16, and a ratio of a flow Q1 passing through the flow regulating valve 16 in the pressure adjustment sub-branch 21 to Q2 passing through the flow regulating valve 16 in the remaining heat exchange branch 20 satisfies the following: Q1/Q2 is greater than the third threshold. The flow regulating valve 16 is disposed to control the flow, thereby facilitating rapid regulation of the flow.

It should be noted that the pressure adjustment sub-branch 21 includes the flow regulating valve 16, and the remaining heat exchange branch 20 includes the flow regulating valve 16. The pressure adjustment sub-branch 21 and the remaining heat exchange branch 20 can be rapidly switched by controlling the flow regulating valve 16. In other words, each heat exchange branch 20 may be the pressure adjustment sub-branch 21.

In some embodiments, at least some of the heat exchange branches 20 include a flow regulating valve 16, and an opening degree of a valve 1 in the pressure adjustment sub-branch 21 is controlled to be greater than an opening degree of a valve 2 in the remaining heat exchange branch 20. In other words, an opening degree of the flow regulating valve 16 in the pressure adjustment sub-branch 21 is greater than an opening degree of the flow regulating valve 16 in the remaining heat exchange branch 20, and the heat exchange media are concentrated in the pressure adjustment sub-branch 21.

In some embodiments, in preheating mode, the pressure adjustment sub-branch 21 is in an operating state, and the remaining heat exchange branch 20 is controlled to be in a non-operating state. The pressure adjustment sub-branch 21 is controlled to be in the operating state, and the remaining heat exchange branch 20 is controlled to be in the non-operating state, so as to further concentrate the heat exchange medium on the pressure adjustment sub-branch 21, thereby improving the concentration degree.

Specifically, that the pressure adjustment sub-branch 21 is in the operating state means that the heat exchange medium flows in the pressure adjustment sub-branch 21.

Specifically, that the remaining heat exchange branch 20 is in the non-operating state means that there is no heat exchange medium in the remaining heat exchange branch 20, so that a sufficient quantity of heat exchange media discharged by the compressor 1 is supplied to the pressure adjustment sub-branch 21. In this solution, a type selection requirement of the compressor 1 can be reduced, provided that a quantity of heat exchange media discharged by the compressor 1 can satisfy a requirement of the pressure adjustment sub-branch 21. When a heat exchange area of the battery heat exchange module 56 in the pressure adjustment sub-branch 21 is large, the heat exchange media discharged by the compressor 1 are concentrated in the pressure adjustment sub-branch 21, so that the requirement of the pressure adjustment sub-branch 21 can still be satisfied.

In some specific embodiments, each heat exchange branch 20 includes a flow regulating valve 16, the remaining heat exchange branch 20 is in the non-operating state, and an opening degree of the flow regulating valve 16 in the remaining heat exchange branch 20 is zero, thereby further concentrating the heat exchange media. That the heat exchange branch 20 is in the non-operating state means that there is no heat exchange medium in the remaining heat exchange branch 20.

In some embodiments, when a minimum value of temperature values at a plurality of positions of the battery reaches a first specified temperature, the temperature of the battery reaches the first temperature. In other words, when a temperature of a part with the lowest temperature of the battery is greater than the first specified temperature, the thermal management system 100 enters normal heating mode, and the temperature of the part with the lowest temperature of the battery is used as a standard, thereby further avoiding a case in which the battery is heated unevenly. The first specified temperature may be set based on a heat exchange amount of the battery. For example, when the first temperature is reached, a target temperature of the battery is 30°C. In this case, in normal heating mode, a plurality of heat exchange branches are controlled, based on the target temperature of the battery, to heat the battery, without causing a case in which the pressure at the air outlet and the air inlet of the compressor is lower than a normal operating value.

In some embodiments, the thermal management system 100 further includes normal heating mode, the heat exchange branch 20 includes the pressure adjustment sub-branch 21, and a flow of the pressure adjustment sub-branch 21 in preheating mode is greater than a flow of the pressure adjustment sub-branch 21 in normal heating mode. The flow of the pressure adjustment sub-branch 21 in preheating mode is set to be greater than the flow of the pressure adjustment sub-branch 21 in normal heating mode to concentrate the heat exchange media, so that a quantity of heat exchange media discharged by the compressor can satisfy the requirement of the pressure adjustment sub-branch 21.

For example, the first specified temperature is 5°C, and the temperature of the part with the lowest temperature of the battery is greater than 5°C. In this case, the thermal management system 100 enters normal heating mode.

In some embodiments, the heat exchange branch 20 includes the battery heat exchange module 56 and a throttle element 15 that are connected in series, and an opening degree of the throttle element 15 is adjusted based on a degree of superheating of the heat exchange medium in the heat exchange branch 20. The opening degree of the throttle element 15 is adjusted based on the degree of superheating, to adjust a heat exchange medium in the battery heat exchange module 56, thereby improving adaptability of the thermal management system 100.

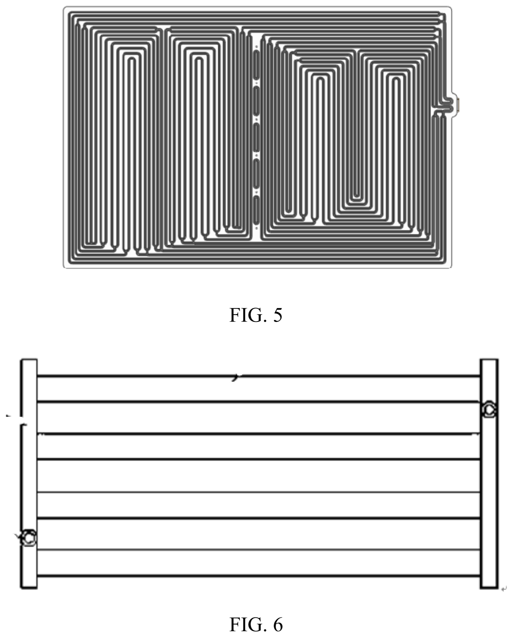

In some embodiments, as shown in FIG. 5, a curved channel is disposed on the battery heat exchange module 56, and the heat exchange medium flows in the curved channel.

In some other embodiments, as shown in FIG. 6, a straight channel is disposed on the battery heat exchange module 56, for example, the battery heat exchange module 56 is a harmonica tube heat exchanger.

In some specific embodiments, the battery heat exchange module 56 is a cold plate, and the cold plate is attached to the battery to heat the battery.

The degree of superheating is a difference between an actual temperature of a specific substance at specific pressure and a saturation temperature. No liquid refrigerant is sucked into the compressor 1 to damage the compressor 1 only when the actual temperature is higher than the saturation temperature.

Specifically, the opening degree of the throttle element 15 needs to be adjusted based on a PID (feedback-adjustment policy).

In some embodiments, in preheating mode, adjusting the opening degree of the throttle element 15 based on the degree of superheating of the heat exchange medium in the heat exchange branch 20 includes: decreasing the opening degree of the throttle element 15 and increasing the degree of superheating when the degree of superheating ΔT4 is less than a first specified value ΔTa; increasing the opening degree of the throttle element 15 and decreasing the degree of superheating when the degree of superheating ΔT4 is greater than a second specified value ΔTb; or maintaining the opening degree of the throttle element 15 when the degree of superheating ΔT4 is greater than or equal to ΔTa and less than or equal to ΔTb, to reduce a probability that a liquid heat exchange medium enters the compressor 1.

For example, when ΔTa is 0°C, ΔTb is 5°C, and the degree of superheating ΔT4 is 0°C to 5°C, the opening degree of the throttle element 15 is maintained.

Specifically, the thermal management system 100 further includes a temperature and pressure sensor, and the temperature and pressure sensor is disposed at the air inlet of the compressor 1 to obtain ΔT4, thereby further reducing the probability that the liquid heat exchange medium enters the compressor 1.

In some embodiments, the throttle element 15 has an initial opening degree. The initial opening degree is a dynamic change value, and is related to a coolant temperature in the coolant subsystem 60 in the following description. The coolant temperature in the coolant subsystem 60 is determined before a valve is opened. A higher coolant temperature indicates a larger initial opening degree, and a lower coolant temperature indicates a smaller initial opening degree.

More specifically, before ΔT4 is used, the throttle element 15 runs for τ1 min based on the initial opening degree. τ1 is specified time.

In some embodiments, a plurality of heat exchange branches 20 include a bottom heat exchange branch 20 and a top heat exchange branch 20, the top heat exchange branch 20 is located at a top of the battery, and the bottom heat exchange branch 20 is located at a bottom of the battery. In preheating mode, a temperature difference ΔT between an inlet end 40 and an outlet end 30 of the bottom heat exchange branch 20 is controlled to be less than a second threshold. The temperature difference ΔT between the inlet end 40 and the outlet end 30 of the bottom heat exchange branch 20 is set to be less than the second threshold, so as to amplify a heating effect of preheating mode by using gravity of the battery.

Specifically, the bottom heat exchange branch 20 is located at the bottom of the battery. The gravity of the battery makes the bottom heat exchange branch 20 be closely attached to the battery. In preheating mode, the bottom heat exchange branch 20 is used to heat the battery, so as to improve the heating effect.

In some embodiments, the thermal management system 100 further includes a coolant subsystem 60, and the control method further includes the following step:

S40: when a waste heat recovery instruction is obtained, the coolant subsystem 60 exchanges heat with the battery subsystem 80. Waste heat of the coolant subsystem 60 is recovered to improve energy utilization.

Specifically, the battery subsystem 80 includes an internal evaporator 7, and the internal evaporator 7 is disposed between a commutation branch and a compressor 1.

Specifically, the coolant subsystem 60 includes a water pump 14, a power assembly 13, and a radiator 10. The water pump 14 drives coolant to flow through the power assembly 13 to dissipate heat of the power assembly 13. When the heat of the power assembly 13 needs to be dissipated to an external environment, the coolant is controlled to flow through the power assembly 13 and the radiator 10, and the heat is dissipated by using the radiator 10 that exchanges heat with the external environment.

More specifically, the thermal management system 100 includes a first heat exchanger 4. The first heat exchanger 4 includes a first refrigerant channel and a first coolant channel that mutually exchange heat, the first refrigerant channel is a part of the battery subsystem 80, and the first coolant channel is a part of the coolant subsystem 60, so that waste heat recovery of the coolant subsystem 60 can be implemented by using the first refrigerant channel and the first coolant channel that mutually exchange heat.

In some embodiments, the thermal management system 100 has a normal heating mode. In normal heating mode, each heat exchange branch 20 is controlled to heat the battery. A water temperature of the coolant subsystem 60 reaches a third specified temperature, and the thermal management system 100 enters normal heating mode.

Specifically, the third specified temperature is greater than 0°C, and waste heat is fully recovered.

In some embodiments, when the battery is charged, and a temperature of a battery cell in the battery is less than TA, a battery management system (BMS) sends a battery heating signal.

Specifically, TA is a preset value.

In some embodiments, when the battery is discharging and a temperature of the battery is less than TB, the BMS sends a battery heating command, where TB is a dynamic change value, and is related to a state of charge (SOC). A larger SOC indicates a smaller TB value, and a smaller SOC indicates a larger TB value.

As shown in FIG. 2, the following describes the thermal management system 100 in this embodiment of this application in detail with reference to the accompanying drawings.

The thermal management system 100 includes: a compressor 1, an internal condenser 2, an external condenser 3, a first heat exchanger 4, a battery upper cold plate 5, a battery lower cold plate 6, an internal evaporator 7, an accumulator 8, a radiator 10, a liquid storage tank 11, a four-way water valve 12, a power assembly 13, a water pump 14, a first electronic expansion valve 151, a second electronic expansion valve 152, a third electronic expansion valve 153, a fourth electronic expansion valve 154, a first large-diameter electronic expansion valve 161, a second large-diameter electronic expansion valve 162, a first solenoid valve 171, a second solenoid valve 172, a third solenoid valve 173, a fourth solenoid valve 174, a first one-way valve 181, a second one-way valve 182, a fourth one-way valve 184, a first temperature and pressure integrated sensor PT1, a second temperature and pressure integrated sensor PT2, a third temperature and pressure integrated sensor PT3, a fourth temperature and pressure integrated sensor PT4, a second temperature sensor T2, a third temperature sensor T3, and a fourth temperature sensor T4.

The battery upper cold plate 5 and the battery lower cold plate 6 are the foregoing battery heat exchange module 56, the first electronic expansion valve 151 and the second electronic expansion valve 152 are the foregoing throttle element 15, the first large-diameter electronic expansion valve 161 and the second large-diameter electronic expansion valve 162 are the foregoing flow regulating valve 16, and the fourth temperature and pressure integrated sensor PT4 is the foregoing temperature and pressure sensor.

When the thermal management system enters a preheating mode, the second solenoid valve 172, the third solenoid valve 173, the first electronic expansion valve 151, the first large-diameter electronic expansion valve 161, the second electronic expansion valve 152, and the fourth electronic expansion valve 154 are closed, and the first solenoid valve 171, the fourth solenoid valve 174, the second large-diameter electronic expansion valve 162, and the third electronic expansion valve 153 are opened.

In preheating mode, a heat exchange medium flow path is as follows: the compressor 1→the first solenoid valve 171→the second large-diameter electronic expansion valve 162→the battery lower cold plate 6→the third electronic expansion valve 153→the first one-way valve 181→the first heat exchanger 4→the fourth solenoid valve 174→the accumulator 8→the compressor 1.

When the thermal management system enters a normal heating mode, the second solenoid valve 172, the third solenoid valve 173, the first electronic expansion valve 151, and the fourth electronic expansion valve 154 are closed, and the first solenoid valve 171, the fourth solenoid valve 174, the second large-diameter electronic expansion valve 162, the third electronic expansion valve 153, the first large-diameter electronic expansion valve 161, and the second electronic expansion valve 152 are opened.

In normal heating mode, a heat exchange medium flow path is as follows: the compressor 1→the first solenoid valve 171→[(the second large-diameter electronic expansion valve 162→the battery lower cold plate 6→the third electronic expansion valve 153) or (the first large-diameter electronic expansion valve 161→the battery upper cold plate 5→the second electronic expansion valve 152)]→the first one-way valve 181→the first heat exchanger 4→the fourth solenoid valve 174→the accumulator 8→the compressor 1.

In the control method in this application, ① in a battery heating phase, the second electronic expansion valve 152 is closed to increase pressure at an outlet of the compressor 1, thereby increasing a temperature and pressure of the battery lower cold plate 6, and avoiding damage to the compressor 1 caused when the compressor 1 operates outside its operating range. In the control method, the pressure at the outlet of the compressor 1 can be increased, power consumption of the compressor 1 is increased, and a temperature at the outlet of the compressor 1 is increased, thereby increasing a temperature at a heating inlet of the battery lower cold plate 6, increasing a heat exchange temperature difference between the cold plate and a battery cell, and increasing a heating rate of the battery cell. (2) After battery heating ends, in normal heating mode, the second electronic expansion valve 152 and the first large-diameter electronic expansion valve 161 are opened, and the battery upper cold plate and the battery lower cold plate are simultaneously opened to heat the battery, so as to maintain consistency of an internal temperature of the battery cell, maintain a good state of the battery cell, prolong a service life of the battery cell, and reduce a battery fault.

The thermal management system according to embodiments of this application includes the compressor 1, the heat exchange branch 21, the first heat exchanger 4, and a control module.

The compressor 1 has an air inlet and an air outlet.

There is at least one heat exchange branch 21. The heat exchange branch 21 exchanges heat with the battery. The thermal management system 100 has a battery heating mode. In battery heating mode, a first end of the heat exchange branch 21 is connected to the air outlet.

A first end of the first heat exchanger 4 is connected to a second end of the heat exchange branch through the throttle element 15, and a second end of the first heat exchanger is connected to the air inlet.

The control module is configured to perform the foregoing control method for a thermal management system.

The thermal management system has the battery heating mode, and battery heating mode includes a preheating mode and a normal heating mode.

According to the thermal management system in embodiments of this application, the foregoing control method is performed, to avoid an excessively large pressure difference between an inlet end and an outlet end of a heat exchange branch, so that a pressure difference between an air inlet and an air outlet of a compressor can be small. This can not only avoid damage to the compressor 1 caused when the compressor 1 operates outside its operating range, but also avoid affecting a heating effect on the battery because a temperature of a heat exchange medium is low, thereby reducing a probability that the compressor is damaged.

A vehicle according to embodiments of this application includes the thermal management system 100 and a control module, and the control module is configured to perform the foregoing control method for a thermal management system.

According to the vehicle in embodiments of this application, the control module is disposed to perform the foregoing control method for a thermal management system, so that a temperature of a heat exchange medium at an outlet end 30 of at least one heat exchange branch 20 is greater than or equal to a first threshold T1, so as to control the heat exchange medium at the outlet end 30 to remain in a specific state, thereby reducing a probability of excessive liquefaction of the heat exchange medium and reducing a probability that a compressor is damaged.

In some embodiments, the control module includes a storage medium. The storage medium is configured to store executable instructions, and the instructions are used to perform the foregoing control method for a thermal management system.

According to the vehicle in embodiments of this application, the storage medium is used to store the control method for a thermal management system, so that the control module can perform the foregoing control method for a thermal management system, and the temperature of the heat exchange medium at the outlet end 30 of the at least one heat exchange branch 20 is greater than or equal to the first threshold T1, so as to control the heat exchange medium at the outlet end 30 to remain in the specific state, thereby reducing the probability of excessive liquefaction of the heat exchange medium and reducing the probability that the compressor is damaged.

In some examples, the control module includes a storage apparatus, and the storage apparatus includes the foregoing storage medium.

According to the vehicle in embodiments of this application, the storage apparatus uses the foregoing storage medium, so that the temperature of the heat exchange medium at the outlet end 30 of the at least one heat exchange branch 20 is greater than or equal to the first threshold T1, so as to control the heat exchange medium at the outlet end to remain in the specific state, thereby reducing the probability of excessive liquefaction of the heat exchange medium and reducing the probability that the compressor is damaged.

According to the control method for a thermal management system in embodiments of this application, the thermal management system 100 includes a battery subsystem 80, the battery subsystem 80 includes a plurality of heat exchange branches 20 disposed in parallel, the heat exchange branch 20 is configured to exchange heat with a battery, and the plurality of heat exchange branches 20 disposed in parallel include a pressure adjustment sub-branch 21. As shown in FIG. 4, the control method includes the following steps:
S50: obtain a battery heating signal.
S60: the thermal management system 100 enters a preheating mode, wherein in preheating mode, a total flow Q1 in the pressure adjustment sub-branch 21 is greater than a total flow Q2 in a remaining heat exchange branch 20.

The total flow Q1 of heat exchange media in the pressure adjustment sub-branch 21 is set to be greater than the total flow Q2 in the remaining heat exchange branch 20, so as to concentrate heat exchange media discharged by the compressor 1 in the pressure adjustment sub-branch 21, so that the heat exchange media discharged by the compressor can sufficiently enter the pressure adjustment sub-branch 21, thereby adjusting pressure of the pressure adjustment sub-branch 21 and reducing a probability that the compressor 1 is damaged.

When a temperature of the battery is low, the total flow Q1 in the pressure adjustment sub-branch 21 is greater than the total flow Q2 in the remaining heat exchange branch 20, and the heat exchange media discharged by the compressor 1 can sufficiently enter the pressure adjustment sub-branch 21. In this way, even if the temperature of the battery is low, because a quantity of the heat exchange media in the pressure adjustment sub-branch 21 is sufficient, when a battery heat exchange module fully exchanges heat with the battery, a temperature and/or pressure of a heat exchange medium at an outlet of the pressure adjustment sub-branch still satisfy a requirement of the compressor for normal operation, thereby avoiding a case in which pressure at an air outlet and an air inlet of the compressor is lower than a normal operating value.

According to the control method for a thermal management system in embodiments of this application, the total flow Q1 in the pressure adjustment sub-branch 21 is set to be greater than the total flow Q2 in the remaining heat exchange branch 20, so that the heat exchange media discharged by the compressor 1 can sufficiently enter the pressure adjustment sub-branch 21. In this way, even if the temperature of the battery is low, because the quantity of the heat exchange media in the pressure adjustment sub-branch is sufficient, when the battery heat exchange module 56 fully exchanges heat with the battery, the temperature and/or the pressure of the heat exchange medium at the outlet of the pressure adjustment sub-branch still satisfy the requirement of the compressor for normal operation, thereby avoiding the case in which the pressure at the air outlet and the air inlet of the compressor is lower than the normal operating value, and reducing the probability that the compressor is damaged.

In some embodiments, a ratio Q1/Q2 of the total flow Q1 in the pressure adjustment sub-branch 21 to the total flow Q2 in the remaining heat exchange branch 20 is greater than a third threshold.

Specifically, Q1 is the total flow of the heat exchange media in the pressure adjustment sub-branch 21. There may be one pressure adjustment sub-branch 21, and Q1 is a flow of heat exchange media in the one pressure adjustment sub-branch 21. There may alternatively be a plurality of pressure adjustment sub-branches 21, and Q1 is a total flow of heat exchange media in the plurality of pressure adjustment sub-branches 21.

Specifically, Q2 is the total flow of the heat exchange media in the remaining heat exchange branch 20. There may be one remaining heat exchange branch 20, and Q1 is a flow of heat exchange media in the one remaining heat exchange branch 20. There may alternatively be a plurality of remaining heat exchange branches 20, and Q1 is a total flow of heat exchange media in the plurality of remaining heat exchange branches 20.

Specifically, the third threshold is a preset value. It will be understood that the third threshold reflects a concentration degree of the heat exchange medium. By changing the third threshold, the concentration degree of the heat exchange medium is controlled, and most of the heat exchange media discharged by the compressor 1 are concentrated in the pressure adjustment sub-branch 21, so that the quantity of heat exchange media in the pressure adjustment sub-branch 21 is sufficient. When the battery heat exchange module 56 fully exchanges heat with the battery, the temperature and/or the pressure of the heat exchange medium at the outlet of the pressure adjustment sub-branch still satisfy the requirement of the compressor for normal operation, thereby avoiding the case in which the pressure at the air outlet and the air inlet of the compressor is lower than the normal operating value.

For example, the third threshold is 2, in other words, the flow in the pressure adjustment sub-branch 21 accounts for two thirds or above of the total flow. This further improves the concentration degree of the heat exchange medium. Most of the heat exchange media discharged by the compressor 1 are concentrated in the pressure adjustment sub-branch 21, so that the quantity of heat exchange media in the pressure adjustment sub-branch 21 is sufficient. When the battery heat exchange module 56 fully exchanges heat with the battery, the temperature and/or the pressure of the heat exchange medium at the outlet of the pressure adjustment sub-branch still satisfy the requirement of the compressor for normal operation, thereby avoiding the case in which the pressure at the air outlet and the air inlet of the compressor is lower than the normal operating value.

The foregoing will be briefly understood as follows: In the related technology, an upper limit of a total refrigerant flow supplied by the compressor is a fixed value, a large quantity of heat exchange branches require a large quantity of refrigerants, and each heat exchange branch obtains a small quantity of refrigerants. As a result, a refrigerant in each heat exchange branch fully exchanges heat with the battery. When the temperature of the battery is low, a liquefaction degree of a refrigerant of a battery heat exchange module 56 in each heat exchange branch is high, thereby affecting the pressure at the air inlet and the air outlet of the compressor, and further affecting normal operation of the compressor. In this application, Q1/Q2 is set to be greater than the third threshold, so that the heat exchange media discharged by the compressor 1 can sufficiently enter the pressure adjustment sub-branch 21. In this way, even if the temperature of the battery is low, because the quantity of heat exchange media in the pressure adjustment sub-branch 21 is sufficient, when the battery heat exchange module 56 fully exchanges heat with the battery, the temperature and/or the pressure of the heat exchange medium at the outlet of the pressure adjustment sub-branch still satisfy the requirement of the compressor for normal operation, thereby avoiding the case in which the pressure at the air outlet and the air inlet of the compressor is lower than the normal operating value.

In some embodiments, at least one heat exchange branch 20 includes a flow regulating valve 16, and an opening degree of a valve 1 in the at least one heat exchange branch 20 is controlled to be greater than an opening degree of a valve 2 in the remaining heat exchange branch 20. In other words, an opening degree of the flow regulating valve 16 in the at least one heat exchange branch 20 is greater than an opening degree of the flow regulating valve 16 in the remaining heat exchange branch 20, and the heat exchange media are concentrated in the at least one heat exchange branch 20.

In some embodiments, in preheating mode, the pressure adjustment sub-branch 21 is in an operating state, and the remaining heat exchange branch 20 is controlled to be in a non-operating state. The remaining heat exchange branch 20 is controlled to be in the non-operating state, so as to further concentrate the heat exchange media in the pressure adjustment sub-branch 21, and improve the concentration degree, so that the heat exchange media discharged by the compressor 1 can sufficiently enter the pressure adjustment sub-branch 21. In this way, even if the temperature of the battery is low, because the quantity of heat exchange media in the pressure adjustment sub-branch 21 is sufficient, when the battery heat exchange module 56 fully exchanges heat with the battery, the temperature and/or the pressure of the heat exchange medium at the outlet of the pressure adjustment sub-branch still satisfy the requirement of the compressor for normal operation, thereby avoiding the case in which the pressure at the air outlet and the air inlet of the compressor is lower than the normal operating value.

Specifically, the remaining heat exchange branch 20 is in the non-operating state, and no heat exchange medium enters the remaining heat exchange branch 20, so that the heat exchange media discharged by the compressor 1 are concentrated in the pressure adjustment sub-branch 21, and the heat exchange media discharged by the compressor 1 can sufficiently enter the pressure adjustment sub-branch 21. In this way, even if the temperature of the battery is low, because the quantity of heat exchange media in the pressure adjustment sub-branch 21 is sufficient, when the battery heat exchange module 56 fully exchanges heat with the battery, the temperature and/or the pressure of the heat exchange medium at the outlet of the pressure adjustment sub-branch still satisfy the requirement of the compressor for normal operation, thereby avoiding the case in which the pressure at the air outlet and the air inlet of the compressor is lower than the normal operating value.

In some embodiments, the thermal management system 100 enters a normal heating mode when the temperature of the battery reaches a first temperature, and in normal heating mode, the at least one heat exchange branch 20 is controlled, based on a real-time temperature of the battery, to be turned on to heat the battery. In some embodiments, a flow of the pressure adjustment sub-branch 21 in preheating mode is greater than a flow of the pressure adjustment sub-branch 21 in normal heating mode. In other words, there are more heat exchange media in the pressure adjustment sub-branch 21 in preheating mode, and the heat exchange media are concentrated, so that the heat exchange media discharged by the compressor 1 can sufficiently enter the pressure adjustment sub-branch 21. In this way, even if the temperature of the battery is low, because the quantity of heat exchange media in the pressure adjustment sub-branch 21 is sufficient, when the battery heat exchange module 56 fully exchanges heat with the battery, the temperature and/or the pressure of the heat exchange medium at the outlet of the pressure adjustment sub-branch still satisfy the requirement of the compressor for normal operation, thereby avoiding the case in which the pressure at the air outlet and the air inlet of the compressor is lower than the normal operating value.

In some embodiments, when a minimum value of temperature values at a plurality of positions of the battery reaches a first specified temperature, the temperature of the battery reaches the first temperature. In other words, when a temperature of a part with the lowest temperature of the battery is greater than the first specified temperature, the thermal management system 100 enters normal heating mode. The temperature of the part with the lowest temperature of the battery is used as a standard, thereby further avoiding a case in which the battery is heated unevenly. The first specified temperature may be set based on a heat exchange amount of the battery. For example, when the first temperature is reached, a target temperature of the battery is 30°C. In this case, in normal heating mode, a plurality of heat exchange branches are controlled, based on the target temperature of the battery, to heat the battery, without causing a case in which the pressure at the air outlet and the air inlet of the compressor is lower than a normal operating value.

For example, the first specified temperature is 5°C, and the temperature of the part with the lowest temperature of the battery is greater than 5°C. In this case, the thermal management system 100 enters the normal heating mode.

In some embodiments, the heat exchange branch 20 includes the battery heat exchange module 56 and a throttle element 15 that are connected in series, and an opening degree of the throttle element 15 is adjusted based on a degree of superheating of the heat exchange medium in the heat exchange branch 20. The opening degree of the throttle element 15 is adjusted based on the degree of superheating, to adjust a heat exchange medium in the battery heat exchange module 56, thereby improving adaptability of the thermal management system 100.

Specifically, the battery heat exchange module 56 is a cold plate, and the cold plate is attached to the battery to heat the battery.

The degree of superheating is a difference between an actual temperature of a specific substance at specific pressure and a saturation temperature. No liquid refrigerant is sucked into the compressor 1 to damage the compressor 1 only when the actual temperature is higher than the saturation temperature.

In some embodiments, in the preheating mode, adjusting the opening degree of the throttle element 15 based on the degree of superheating of the heat exchange medium in the heat exchange branch 20 includes:
decreasing the opening degree of the throttle element 15 and increasing the degree of superheating when the degree of superheating ΔT4 is less than a first specified value ΔTa; increasing the opening degree of the throttle element 15 and decreasing the degree of superheating when the degree of superheating ΔT4 is greater than a second specified value ΔTb; or maintaining the opening degree of the throttle element 15 when the degree of superheating ΔT4 is greater than or equal to ΔTa and less than or equal to ΔTb, to reduce a probability that a liquid heat exchange medium enters the compressor 1.

For example, when ΔTa is 0°C, ΔTb is 5°C, and the degree of superheating ΔT4 is 0°C to 5°C, the opening degree of the throttle element 15 is maintained.

Specifically, the thermal management system 100 further includes a temperature and pressure sensor, and the temperature and pressure sensor is disposed at the air inlet of the compressor 1 to obtain ΔT4, thereby further reducing the probability that the liquid heat exchange medium enters the compressor 1.

In some embodiments, the throttle element 15 has an initial opening degree. The initial opening degree is a dynamic change value, and is related to a coolant temperature in the coolant subsystem 60 in the following description. The coolant temperature in the coolant subsystem 60 is determined before a valve is opened. A higher coolant temperature indicates a larger initial opening degree, and a lower coolant temperature indicates a smaller initial opening degree.

More specifically, before ΔT4 is used, the throttle element 15 runs for τ1 min based on the initial opening degree. τ1 is specified time.

In some embodiments, the plurality of heat exchange branches 20 include a bottom heat exchange branch 20 and a top heat exchange branch 20, the top heat exchange branch 20 is located at a top of the battery, and the bottom heat exchange branch 20 is located at a bottom of the battery. In preheating mode, a total flow Q1 of the bottom heat exchange branch 20 is controlled to be greater than a total flow Q2 of the top heat exchange branch 20. The total flow Q1 of the bottom heat exchange branch 20 is greater than the total flow Q2 of the top heat exchange branch 20, so as to amplify a heating effect of the preheating mode by using gravity of the battery.

Specifically, the bottom heat exchange branch 20 is located at the bottom of the battery. The gravity of the battery makes the bottom heat exchange branch 20 be closely attached to the battery. In preheating mode, the bottom heat exchange branch 20 is used to heat the battery, so as to improve the heating effect.

In some embodiments, the thermal management system 100 further includes a coolant subsystem 60, and the control method further includes the following step:
S70: when a waste heat recovery instruction is obtained, the coolant subsystem 60 exchanges heat with the battery subsystem 80. Waste heat of the coolant subsystem 60 is recovered to improve energy utilization.

Specifically, the battery subsystem 80 includes an internal evaporator 7, and the internal evaporator 7 is disposed between a commutation branch and a compressor 1.

Specifically, the coolant subsystem 60 includes a water pump 14, a power assembly 13, and a radiator 10. The water pump 14 drives coolant to flow through the power assembly 13 and the radiator 10.

More specifically, the thermal management system 100 includes a first heat exchanger 4, and the first heat exchanger 4 is disposed between the battery subsystem 80 and the coolant subsystem 60, to perform heat exchange.

The first heat exchanger may be a plate heat exchanger, or may be a tube heat exchanger.

In some embodiments, a water temperature of the coolant subsystem 60 reaches a third specified temperature, and the thermal management system 100 enters a normal heating mode.

Specifically, the third specified temperature is greater than 0°C, and waste heat is fully recovered.

In some embodiments, when the battery is charged, and a temperature of a battery cell in the battery is less than TA, a battery management system (BMS) sends a battery heating signal.

Specifically, TA is a preset value.

In some embodiments, when the battery is discharging and a temperature of the battery is less than TB, the BMS sends a battery heating command, where TB is a dynamic change value, and is related to a state of charge (SOC). A larger SOC indicates a smaller TB value, and a smaller SOC indicates a larger TB value.

The thermal management system 100 according to embodiments of this application includes a compressor 1, a heat exchange branch 20, a first heat exchanger 56, and a control module.

The compressor 1 has an air inlet and an air outlet.

A plurality of heat exchange branches 20 are disposed in parallel. The heat exchange branch 20 exchanges heat with the battery. The thermal management system has a battery heating mode. In the battery heating mode, a first end of each heat exchange branch is connected to an air inlet, and the plurality of heat exchange branches 20 disposed in parallel include a pressure adjustment sub-branch 21.

A first end of the first heat exchanger 4 is connected to a second end of each heat exchange branch through a throttle element 15, and a second end of the first heat exchanger is connected to the air inlet.

The control module is configured to perform the foregoing control method for a thermal management system.

The thermal management system 100 has the battery heating mode, and the battery heating mode includes a preheating mode and a normal heating mode.

According to the thermal management system in embodiments of this application, the foregoing control method for a thermal management system is applied to avoid an excessively large pressure difference between an inlet end and an outlet end of a heat exchange branch, so that a pressure difference between an air inlet and an air outlet of a compressor can be small. This can not only avoid damage to the compressor 1 caused when the compressor 1 operates outside its operating range, but also avoid affecting a heating effect on the battery because a temperature of a heat exchange medium is low, thereby reducing a probability that the compressor is damaged.

According to the control method for a thermal management system in embodiments of this application, the thermal management system includes a battery subsystem 80, the battery subsystem 80 includes at least one heat exchange branch 20, and the heat exchange branch 20 is configured to exchange heat with the battery. The control method includes the following steps:
S21: obtain a battery heating signal.
S22: the thermal management system enters the preheating mode. A flow in at least one heat exchange branch in the preheating mode is greater than a flow in the at least one heat exchange branch in the normal heating mode, and a thermal management mode includes the preheating mode and the normal heating mode.

According to the control method for a thermal management system in embodiments of this application, a flow in at least one heat exchange branch is increased to avoid an excessively large pressure difference between an inlet end and an outlet end of a heat exchange branch, so that a pressure difference between an air inlet and an air outlet of a compressor can be small. This can not only avoid damage to the compressor 1 caused when the compressor 1 operates outside its operating range, but also avoid affecting a heating effect on the battery because a temperature of a heat exchange medium is low, thereby reducing a probability that the compressor is damaged.

In some embodiments, the thermal management system includes the battery subsystem 80, and the battery subsystem 80 includes a plurality of heat exchange branches 20 disposed in parallel. The plurality of parallel heat exchange branches are disposed to increase a flow in at least one of the heat exchange branches, thereby reducing a probability that the compressor is damaged.

According to the thermal management system in embodiments of this application, the thermal management system 100 includes the battery subsystem 80, the battery subsystem 80 includes the plurality of heat exchange branches 20, and the heat exchange branch 20 is configured to exchange heat with the battery. Each heat exchange branch 20 includes a battery heat exchange module 56, the plurality of heat exchange branches 20 include a pressure adjustment sub-branch 21, and a flow resistance of the battery heat exchange module 56 in the pressure adjustment sub-branch 21 is less than a flow resistance of the battery heat exchange module 56 in a remaining branch.

It should be further noted that the thermal management system 100 includes a compressor 1. An air outlet of the compressor 1 may be connected to the heat exchange branch 20 to discharge a high-temperature gaseous heat exchange medium to the heat exchange branch 20, and a heat exchange medium that has exchanged heat with the battery in the heat exchange branch 20 may be discharged from an outlet end 30 to an air inlet of the compressor 1.

According to the thermal management system in embodiments of this application, the flow resistance of the battery heat exchange module 56 in the pressure adjustment sub-branch 21 is set to be less than the flow resistance of the battery heat exchange module 56 in the remaining branch, and a flow of the pressure adjustment sub-branch 21 is increased, to avoid an excessively large pressure difference between an inlet end and an outlet end of a heat exchange branch, so that a pressure difference between an air inlet and an air outlet of a compressor can be small. This can not only avoid damage to the compressor 1 caused when the compressor 1 operates outside its operating range, but also avoid affecting a heating effect on the battery because a temperature of a heat exchange medium is low, thereby reducing a probability that the compressor is damaged.

In some embodiments, a plurality of heat exchange branches are disposed in parallel.

In some embodiments, the pressure adjustment sub-branch 21 is disposed on a side of the battery, and the remaining heat exchange branch is disposed on another side of the battery. In this way, temperature equalization of the battery can be improved.

According to the control method for a thermal management system in embodiments of this application, the thermal management system includes the battery subsystem 80, the battery subsystem 80 includes the plurality of heat exchange branches 20, and the heat exchange branch 20 is configured to exchange heat with the battery. Each heat exchange branch 20 includes the battery heat exchange module 56, the plurality of heat exchange branches 20 include the pressure adjustment sub-branch 21, and the flow resistance of the battery heat exchange module 56 in the pressure adjustment sub-branch 21 is less than the flow resistance of the battery heat exchange module 56 in the remaining branch.

It should be further noted that the thermal management system 100 includes a compressor 1. An air outlet of the compressor 1 may be connected to the heat exchange branch 20 to discharge a high-temperature gaseous heat exchange medium to the heat exchange branch 20, and a heat exchange medium that has exchanged heat with the battery in the heat exchange branch 20 may be discharged from an outlet end 30 to an air inlet of the compressor 1.

The control method includes the following steps:
S31: obtain a battery heating signal.
S32: the thermal management system enters a preheating mode, and the pressure adjustment sub-branch 21 exchanges heat with a battery in the preheating mode.

According to the control method for a thermal management system in embodiments of this application, the flow resistance of the battery heat exchange module 56 in the pressure adjustment sub-branch 21 is set to be less than the flow resistance of the battery heat exchange module 56 in the remaining branch, and the flow of the pressure adjustment sub-branch 21 is increased. The foregoing control method is performed, to avoid an excessively large pressure difference between an inlet end and an outlet end of a heat exchange branch, so that a pressure difference between an air inlet and an air outlet of a compressor can be small. This can not only avoid damage to the compressor 1 caused when the compressor 1 operates outside its operating range, but also avoid affecting a heating effect on the battery because a temperature of a heat exchange medium is low, thereby reducing a probability that the compressor is damaged.

A vehicle according to embodiments of this application includes the thermal management system 100 and a control module, and the control module is configured to perform the foregoing control method for a thermal management system.

According to the vehicle in embodiments of this application, the control module is disposed to perform the foregoing control method for a thermal management system, to reduce a probability of excessive liquefaction of the heat exchange medium and reduce a probability that a compressor is damaged.

According to a storage medium in embodiments of this application, the storage medium is configured to perform the foregoing control method for a thermal management system.

According to the storage medium in embodiments of this application, the foregoing control method for a thermal management system is performed, to reduce a probability of excessive liquefaction of the heat exchange medium and reduce a probability that a compressor is damaged.

A storage apparatus according to embodiments of this application includes the foregoing storage medium.

According to the storage apparatus in embodiments of this application, the foregoing storage medium is applied to reduce a probability of excessive liquefaction of the heat exchange medium and reduce a probability that a compressor is damaged.

Other operations of the control method for a thermal management system according to embodiments of this application are known to a person of ordinary skill in the art, and are not described in detail herein.

In description of this application, it will be understood that the indicative orientation or positional relationship indicated by terms "center", "longitudinal", "transverse", "length", "width", "thickness", "upper", "lower", "front", "back", "left", "right", "vertical", "horizontal", "top", "bottom", "inside", "outside", "clockwise", "counterclockwise", "axial", "radial", and "circumferential" is based on the orientation or positional relationship shown in the drawings only for convenience of description of this application and simplification of description rather than indicating or implying that the apparatus or element referred to must have a particular orientation or be constructed and operated in a particular orientation, and therefore, should not be understood as a limitation on this application.

In addition, features defined by "first" and "second" may explicitly or implicitly include one or more of such features, and are used to differentially describe the features, instead of indicating a sequence or importance.

In the descriptions of this application, unless otherwise stated, "a plurality of" means two or more.

In the descriptions of this application, it should be noted that, unless otherwise explicitly specified and defined, the terms "mount", "interconnect", and "connect" will be understood in a broad sense, for example, will be understood as a fixed connection, a detachable connection, or an integrated connection, will be understood as a mechanical connection or an electrical connection, will be understood as a direct connection or an indirect connection through an intermediate medium, or will be understood as internal communication between two elements. A person of ordinary skill in the art may understand specific meanings of the foregoing terms in this application based on specific situations.

In the descriptions of this specification, descriptions referring to the terms "embodiment", "example", and the like mean that specific features, structures, materials, or characteristics described with reference to this embodiment or example are included in at least one embodiment or example of this application. In this specification, illustrative expressions of the foregoing terms do not necessarily refer to a same embodiment or example. Furthermore, the described specific features, structures, materials, or characteristics may be combined in any one or more embodiments or examples in a suitable manner.

Although embodiments of this application have been shown and described, a person of ordinary skill in the art may understand that various changes, modifications, replacements, and variations may be made to these embodiments without departing from the principles and objectives of this application, and the scope of this application is defined by the claims and equivalents thereof.

## Claims

1. A control method for a thermal management system, wherein the thermal management system (100) comprises a battery subsystem (80), the battery subsystem (80) comprises at least one heat exchange branch (20), the heat exchange branch (20) is configured to exchange heat with a battery, and the control method comprises:
obtaining a battery heating signal; and
entering, by the thermal management system, a preheating mode, in the preheating mode, a temperature of a heat exchange medium at an outlet end of the at least one heat exchange branch being greater than or equal to a first threshold T1.

2. The control method for a thermal management system according to claim 1, wherein a temperature difference ΔT between a temperature of a heat exchange medium at an inlet end of the at least one heat exchange branch and the temperature at the outlet end is less than or equal to T2, and T2 is a second threshold.

3. The control method for a thermal management system according to claim 1 or 2, wherein the thermal management system enters a normal heating mode when a temperature of the battery reaches a first temperature, and in the normal heating mode, the at least one heat exchange branch is controlled, based on a real-time temperature of the battery, to be turned on to heat the battery.

4. The control method for a thermal management system according to claim 3, wherein the battery subsystem (80) comprises a plurality of heat exchange branches (20) connected in parallel, the plurality of heat exchange branches (20) are configured to exchange heat with the battery, and the plurality of heat exchange branches (20) comprise a pressure adjustment sub-branch (21); and
in the preheating mode, a temperature of a heat exchange medium at an outlet end of the pressure adjustment sub-branch is controlled to be greater than or equal to the first threshold T1.

5. The control method for a thermal management system according to claim 4, wherein in the preheating mode, a temperature difference ΔT between an inlet end and the outlet end of the pressure adjustment sub-branch is controlled to be less than or equal to T2.

6. The control method for a thermal management system according to claim 4 or 5, wherein at least one heat exchange branch is configured to exchange heat with a first side of the battery, and at least one heat exchange branch is configured to exchange heat with a second side of the battery.

7. The control method for a thermal management system according to any one of claims 4 to 6, wherein the plurality of heat exchange branches (20) comprise the pressure adjustment sub-branch (21) and a heat exchange sub-branch; and
in the preheating mode, a total flow Q1 in the pressure adjustment sub-branch is greater than a total flow Q2 in the heat exchange sub-branch.

8. The control method for a thermal management system according to claim 7, wherein in the preheating mode, a ratio Q1/Q2 of the total flow Q1 of heat exchange media in the pressure adjustment sub-branch to the total flow Q2 in the heat exchange sub-branch is greater than a third threshold.

9. The control method for a thermal management system according to any one of claims 4 to 8, wherein the plurality of heat exchange branches (20) comprise the pressure adjustment sub-branch (21) and the heat exchange sub-branch, and at least some of the heat exchange branches comprise a flow regulating valve (16); and
an opening degree of a valve in the pressure adjustment sub-branch is controlled to be greater than an opening degree of a valve in the heat exchange sub-branch.

10. The control method for a thermal management system according to any one of claims 4 to 6, wherein the plurality of heat exchange branches (20) comprise the pressure adjustment sub-branch (21) and a heat exchange sub-branch; and
in the preheating mode, the heat exchange sub-branch is controlled to be in a non-operating state.

11. The control method for a thermal management system according to any one of claims 3 to 10, wherein when a minimum value of temperature values at a plurality of positions of the battery reaches a first specified temperature, the temperature of the battery reaches the first temperature.

12. The control method for a thermal management system according to any one of claims 1 to 11, wherein the thermal management system further comprises the normal heating mode, the heat exchange branch comprises the pressure adjustment sub-branch, and a flow in the pressure adjustment sub-branch in the preheating mode is greater than a flow in the pressure adjustment sub-branch in the normal heating mode.

13. The control method for a thermal management system according to any one of claims 1 to 12, wherein the heat exchange branch (20) comprises a battery heat exchange module (56) and a throttle element (15) that are connected in series; and
an opening degree of the throttle element is adjusted based on a degree of superheating of a heat exchange medium in the heat exchange branch.

14. The control method for a thermal management system according to claim 13, wherein in the preheating mode, that an opening degree of the throttle element is adjusted based on a degree of superheating of a heat exchange medium in the heat exchange branch comprises:
decreasing the opening degree of the throttle element when the degree of superheating ΔT4 is less than a first specified value ΔTa;
increasing the opening degree of the throttle element when the degree of superheating ΔT4 is greater than a second specified value ΔTb; or
maintaining the opening degree of the throttle element when the degree of superheating ΔT4 is greater than or equal to ΔTa and less than or equal to ΔTb.

15. The control method for a thermal management system according to claim 2, wherein the at least one heat exchange branch (20) comprises a bottom heat exchange branch and a top heat exchange branch, the top heat exchange branch is located at a top of the battery, and the bottom heat exchange branch is located at a bottom of the battery; and
in the preheating mode, a temperature difference ΔT between an inlet end and an outlet end of the bottom heat exchange branch is controlled to be less than the second threshold.

16. The control method for a thermal management system according to any one of claims 1 to 15, wherein the thermal management system (100) further comprises a coolant subsystem (60); and
the control method further comprises:
when a waste heat recovery instruction is obtained, exchanging, by the coolant subsystem, heat with the battery subsystem.

17. The control method for a thermal management system according to claim 16, wherein the thermal management system has the normal heating mode, and in the normal heating mode, each of the heat exchange branches is controlled to heat the battery; and
the thermal management system enters the normal heating mode when a water temperature of the coolant subsystem reaches a third specified temperature.

18. A thermal management system (100), comprising:
a compressor (1), the compressor (1) having an air inlet and an air outlet;
at least one heat exchange branch (20), the heat exchange branch (20) exchanging heat with a battery, the thermal management system (100) having a battery heating mode, and in the battery heating mode, a first end of the heat exchange branch (20) being connected to the air outlet;
a first heat exchanger (4), a first end of the first heat exchanger (4) being connected to a second end of the heat exchange branch (20) through a throttle element (15), and a second end of the first heat exchanger (4) being connected to the air inlet; and
a control module, the control module being configured to perform the control method for a thermal management system according to any one of claims 1 to 17.

19. A vehicle, comprising a thermal management system (100) and a control module, the control module being configured to perform the control method for a thermal management system according to any one of claims 1 to 17.

20. The vehicle according to claim 19, wherein the control module comprises a storage medium, the storage medium is configured to store executable instructions, and the instructions are used to perform the control method for a thermal management system according to any one of claims 1 to 17.
